# EUROPEAN PATENT SPECIFICATION

(11) **EP 4 275 860 B1**
(45) Date of publication and mention of the grant of the patent: **10.12.2025**
(21) Application number: 22173038.5
(22) Date of filing: 12.05.2022
(51) Int. Cl.: B29C 45/26, B29C 45/36, B29C 45/16, B29C 45/04

(54) **MOLDING UNIT AND METHOD OF MOLDING AN ARTICLE**
FORMEINHEIT UND VERFAHREN ZUM FORMEN EINES ARTIKELS
UNITÉ DE MOULAGE ET PROCÉDÉ DE MOULAGE D'UN ARTICLE

(43) Date of publication of application: 15.11.2023
(73) Proprietor: The Procter & Gamble Company, Cincinnati, OH 45202 (US)
(72) Inventor: BAUER, Simon, 61476 Kronberg (DE); KOTITSCHKE, Jörg, 61476 Kronberg (DE); WUSTRACK, Ralf, 61476 Kronberg (DE); REUSCHENBACH, Andreas, 61476 Kronberg (DE); KUNZ, Marc, 61476 Kronberg (DE)
(74) Representative: P&G Patent Germany

(56) References cited:
- EP-B1- 2 753 463
- DE-B3- 102014 014 388
- FR-A1- 2 964 060

## Description

### FIELD OF THE INVENTION

The present disclosure is concerned with a molding unit having at least two molding stations and a transfer station for transferring at least a first core between the at least two molding stations.

### BACKGROUND OF THE INVENTION

It is generally known that a molding unit can have at least two molding stations for in sequence injecting plastic material into mold cavities to form an at least 2-component article. A transfer unit such as an indexing plate may be used to transfer at least a first core between the at least two molding stations. Articles, e.g., 2-component toothbrushes may be made in such a molding unit. A molding unit having two molding stations may simultaneously inject different plastic material at the different molding stations.

Document DE 10 2014 014388 B3 discloses a multi-component injection mold comprising two mold halves which can be moved apart and together again and between which at least two mold cavities are provided. A first mold cavity is a pre-injection cavity, and a second mold cavity is a further injection cavity. Furthermore, a disengageable and pivotable index plate is provided which is arranged between the mold halves and on which there is at least one holding device with which a preform can be transferred from the preform cavity into the next cavity. Arranged on the index plate is a drive device which is operatively coupled to the holding device and is designed to rotate the holding device about its longitudinal axis when the preform is transferred.

Document EP 2 753 463 B1 discloses a mold for injection-molding plastics parts, comprising two molds halves that can be moved apart and moved together. The mold has a stripper bar for the finished injection-molded parts, which is mounted on an extendable lifting plate. As the lifting plate is extended, the stripper bar is synchronously positively driven in order to eject the finished injection-molded parts. The mold half with the lifting plate includes a guiding device that is arranged laterally on the mold and has a guide in which one end of the stripper is received, the stripper therefore being force-guided in such a manner that, when the lifting plate is extended, the stripper can be moved along synchronously on mold cores and the finished injection-molded parts can be stripped off from their mold cores.

There is a general need to provide such a molding unit with a higher flexibility allowing a higher degree of article design options.

### SUMMARY OF THE INVENTION

In accordance with at least one aspect, a molding unit is provided in accordance with claim 1.

Preferred further features relating to this aspect are, inter alia, the presence of at least a third molding station; the presence of at least a second core extending from the support, which second core is in a first molding position in which it is extending into the second mold cavity when the first core is in the first molding position in which it is extending into the first mold cavity; a third core position that the first core will be in relative to the support when it is in the second molding position and the core actuation unit being arranged to move the core into this third core position.

In accordance with at least one aspect, a method of molding an article, preferably by using the molding unit as discussed herein, is provided in accordance with claim 12.

### BRIEF DESCRIPTION OF THE DRAWINGS

The present disclosure will be further elucidated by a detailed description of example embodiments and with reference to figures. In the figures
- Fig. 1: is a depiction of a movable mold half, a transfer unit being in a molding position with respect to the movable mold half, and of a fixed mold half of a molding unit in accordance with the present disclosure, which molding unit has four molding stations;
- Fig. 2: is a depiction of the movable mold half as shown in Fig. 1 but with the transfer unit shown in a demolding position rather than a molding position;
- Fig. 3: is a magnified depiction of a portion of the moveable mold half and of the transfer unit shown in Fig. 2;
- Fig. 4A: is a perspective view onto a first core extending from a support and being in a first core position relative to the support and specifically where a first core actuation sub-unit and a second core actuation sub-unit of a core actuation unit are positioned relative to each other such that they can mechanically engage when the support is moved closer towards the movable mold half;
- Fig. 4B: is a perspective view onto the first core shown in Fig. 4A but where the transfer unit was moved towards a first molding station half of the movable mold half such that the first core is now in the first molding position with respect to a first mold cavity of the first molding station and where the first core was moved by mechanically interacting elements of the core actuation unit into a second core position relative to the support;
- Fig. 4C: is a similar depiction as in Fig. 4A where the first core is in a fourth core position relative to the support and is positioned for being moved into a second molding position in a second mold cavity half of a second molding station half;
- Fig. 4D: is a similar depiction as in Fig. 4B, where the first core was moved into a third core position relative to the support and into a second molding position in which it is extending into a second mold cavity half of a second mold station half; and
- Fig. 5: is a semi-transparent depiction of a portion of the support showing elements of a first core-actuation sub-unit otherwise hidden in the support, specifically a meshed toothed bar and a toothed wheel.

### DETAILED DESCRIPTION OF THE INVENTION

In accordance with the present description, the terms "first" and "second" and "third" and fourth" etc. are not used - if not otherwise indicated - to relate to an order such that, e.g., the first molding station would mean the molding station at which the molding process starts. These terms are only used to indicate different elements or objects or concepts (such as a position) of the same nature. E.g., the use of the terms "first core position" and "second core position" and "third core position" and "fourth core position" does not necessarily mean that a core is subsequently moved into these positions as indicated by their numbering but just that an object can be brought into these four positions and the sequence in which these positions are achieved is not bound by the terminology but will become clear from the context provided by the description.

A molding unit as discussed herein comprises a fixed molding half and a movable molding half that realize at least two molding stations that each comprise at least one mold (or mold insert) defining at least one mold cavity and further comprises a transfer unit having at least a first core provided at and extending from a support of the transfer unit. The transfer unit is arranged to move the first core from one molding station, e.g., from a first molding station to another molding station, e.g., to a second molding station, so that intermediate products made at one molding station can be transferred to another molding station for adding another material component, where a final product or article may result but this shall exclude that the molding unit creates only an intermediate product that will be finalized elsewhere. The transfer station may comprise a rotatable and axially movable plate, e.g., an indexing plate. The transfer unit may thus have four positions: a first transfer position in which the first core is positionally aligned with the first molding station, a second transfer position in which the first core extends into the first cavity of the first molding station - this may be said to be a first molding position of the first core, a third transfer position in which the first core is positionally aligned with a second molding station and a fourth transfer position in which the first core extends into the second cavity of the second molding station - this may be said to be a second molding position of the first core. The transfer unit may comprise at least a second core, which may be simultaneously moved together with the first core. The second core may extend into the second cavity of the second molding station when the first core extends into the first cavity of the first molding station and the second core may extend into the first cavity of the first molding station when the first core extends into the second cavity of the second molding station. Instead of two molding stations, the molding unit may comprise three molding stations or four molding stations etc. While the number of cores does not need to correlate with the number of molding stations, the transfer unit may comprise three cores in case of three molding stations and four cores in case of four molding stations. One of the molding stations may be replaced by a demolding station, where instead of a further molding step the final or intermediate products or articles are taken off the core. Further, each molding station may comprise a plurality of cavities and instead of one core, the transfer unit may comprise a respective plurality of cores that each extend into one of the plurality of cavities of the respective molding station so that a plurality of articles or intermediate articles can be simultaneously injection molded at a given molding station. E.g., the molds of the different molding stations may each define two or three or four or eight or 16 or 32 etc. mold cavities for simultaneous injection molding of a respective number of intermediate or final products. It should also be understood that the step of injection molding a plastic material into a mold cavitiy requires that the fixed molding half and the movable molding half are closed.

It is known that the molten plastic material used to injection mold components of an article or product to be made in the mold cavities of the molding stations are injected into the mold cavities by nozzles provided at a fixed molding half. Thus, the injection side of the plastic material is predefined by this governing arrangement. If now a further component of an article should only be overmolded onto, e.g., a backside of a previously molded intermediate article, where backside shall refer to the side of the article facing towards the movable molding half, then the further component needs to be guided from the front side of the article to the backside of the article and a respective channel must be provided as the injection side also remains the fixed mold half. But in accordance with the present description, at least the first core is arranged to be movable, specifically is arranged for rotation around a rotation axis, so that the previous backside of the intermediate article can face the fixed molding half. The rotation axis may preferably coincide with or be parallel to a longitudinal axis of the first core, further preferably wherein the longitudinal axis of the first core extends through a fixed end of the core, the fixed end being where the core is attached to the support, and a free end being opposite to the fixed end. Then the further component does not need to be guided towards the backside and a respective channel does not need to be provided. This allows for a higher design freedom in the final product appearance.

**In** simple words, the at least first core is arranged to be rotatable, and a core actuation unit is provided to affect the selective rotation of the first core at least at one of the molding stations. The core actuation unit may have a first core actuation sub-unit provided at the support and connected with the first core and a second core actuation sub-unit provided at least at one of the first or second molding stations to affect the rotation of the first core when it is moved into the respective molding position. The first and second core actuation sub-units are arranged for mechanical engagement when the first core is moved into at least one of the at least two molding positions.

The first core thus has a first core position relative to the support of the transfer unit prior to being moved into the first molding position. When the first core is in the first core position, it may be positionally aligned with the first mold and hence with the first mold cavity. The first core has a second core position different to the first core position relative to the support, and the first core is in the second core position relative to the support when the first core is in the first molding position when the first core extends into the first cavity. Further, the first core may have a third core position different to the second core position relative to the support of the transfer station when the first core is in the second molding position in which the first core extends into the second cavity of the second mold. When the transfer unit moves the first core out of the first molding position, the first core may take a fourth core position relative to the support - the fourth core position may specifically be identical with the first core position relative to the support, i.e., the first core may be moved inversely when it is moved out of the first molding position in comparison to when it is moved into the first molding position.

A core actuation unit is provided to affect the motion of the first core such that the first core is in the first core position or the second core position relative to the support in dependence of the position of the transfer unit. The core actuation unit may comprise a first core actuation sub-unit that is provided at the transfer unit, specifically at the support, and a second core actuation sub-unit that is provided at least at one of the two molding stations, e.g., at the first molding station. The first core actuation sub-unit and the second core actuation sub-unit are arranged for mechanical engagement when the transfer unit is moved from its first transfer position into its second transfer position or when it is moved from its third transfer position into its fourth transfer position. As an example, the first core actuation sub-unit may comprise a first core actuation element, a second core actuation element and a first curve follower provided at the first core actuation element. The second core actuation sub-unit may comprise a first guiding curve element provided at a fixed position relative to the first molding station. In operation, when the transfer unit, specifically the support, is moved, e.g., from the first transfer position into the second transfer position, the first curve follower gets into mechanical engagement with the first guiding curve element so that the first curve follower is moved along a curve defined by the first guiding curve element. The moving first curve follower may respectively move the first core actuation element and the first core actuation element may then move the second core actuation element to move the first core from the first core position relative to the support into the second core position relative to the support. To give further a further detail of this example, the first guiding curve element may comprise a channel having an open end and the first curve follower may be a projection, preferably a freely rotatable wheel, that engages with the channel when the transfer unit is moved and that is guided by the channel. The first core actuation element may be a linear extending toothed bar or geared rod that is in meshed engagement with a toothed wheel or gearwheel realizing the second core actuation element. Thus, movement of the projection in the channel causes a linear motion of the toothed rod that causes a rotation of the toothed wheel. The toothed bar may be provided at a frame structure that is positively guided to only move in a linear manner. The toothed wheel may be fixedly connected at the first core to thus cause a rotation of the first core when the toothed wheel rotates; the first core may be arranged for rotation around a longitudinal axis, e.g., the first core may be mounted on a longitudinally extending axle.

The first guiding curve element may be designed to cause any desired angular rotation of the first core, e.g., a rotation by 5 degrees or 10 degrees or 15 degrees or 20 degrees or 30 degrees or 45 degrees or 60 degrees or 75 degrees or 90 degrees or 120 degrees or 150 degrees or 180 degrees or any other value in between 0 degrees and 180 degrees like 18 degrees or 72 degrees etc., either in a clockwise direction or in a counterclockwise direction. The core actuation unit may comprise a second guiding curve element that may then be provided in a fixed position relative to the second or any other molding station and the first curve follower or a second curve follower provided at the first core actuation element may then get into engagement with the second guiding curve element when the transfer unit is moved from the third transfer position into the fourth transfer position. The second guiding curve element may be designed to cause a rotation of the first core by a different rotation angle than the rotation angle caused by the first guiding curve element. E.g., the first guiding curve element may be designed to rotate the first core by +90 degrees and the second guiding curve element may be designed to rotate the first core by -90 degrees or by +180 degrees etc. The first core may then have a third core position relative to the support when it is in the second molding position that is different to the second core position.

While not necessary, the core actuation unit may cause a motion of the first core when the transfer unit moves out of the second transfer position in which the first core is in the second core position relative to the support and the first core may thus be moved into a fourth core position when the transfer unit moves the first core out of the first molding position. The mentioned motion may preferably be the inverse motion of the first core as was already explained, i.e., the fourth core position of the first core relative to the support may be identical with the first core position of the first core relative to the support. The thus created possibility to move the first core into different rotational positions around to a longitudinal axis of the first core with respect to the support of the transfer unit allows to inject further plastic components at arbitrary circumferential positions around the intermediate products that are transferred between the molding stations.

The first guiding curve element (and also all further guiding curve elements if such are present) may be replaceable, e.g., via a quick-release mechanism, so that the rotation angle induced by the first guiding curve element can be varied and adapted to the products or articles that shall be made. This is in particular useful if the mold unit is intended for molding small batches of various products.

An example method of molding an article or product in accordance with the present disclosure comprises the steps of
(a) moving a first core into a first molding position in which the first core extends into a first mold cavity of a first mold,
(b) while moving the first core into the first molding position, moving the first core from a first core position relative to a support at which the first core is provided into a second core position relative to the support, wherein the first core is in the second core position when it is in the first molding position,
(c) injection molding a plastic component into the first mold cavity to form a portion of the article - this may be the first plastic component that forms a first intermediate article,
(d) moving the first core from the first molding position into a second molding position in which the first core extends into a second mold cavity of a second mold,
(e) while moving the first core into the second molding position, moving the first core from the second core position relative to the support into a third core position different to the second core position relative to the support, wherein the first core is in the third core position when it is in the second molding position, and
(f) injection molding a further plastic component into the second mold cavity to form a further portion of the article - this may a second component from more than two components, or it may be the final component of a 2-component article.

The steps of moving the first core from the first core position into the second core position and moving the first core from the second core position into the third core position involves rotating the first core around a rotation axis, specifically around a longitudinal axis of the first core.

The method may further involve the step of moving the first core from the second core position back into the first core position when the first core is moved out of the first molding position.

The description of the molding unit above of course naturally translates into respective method steps.

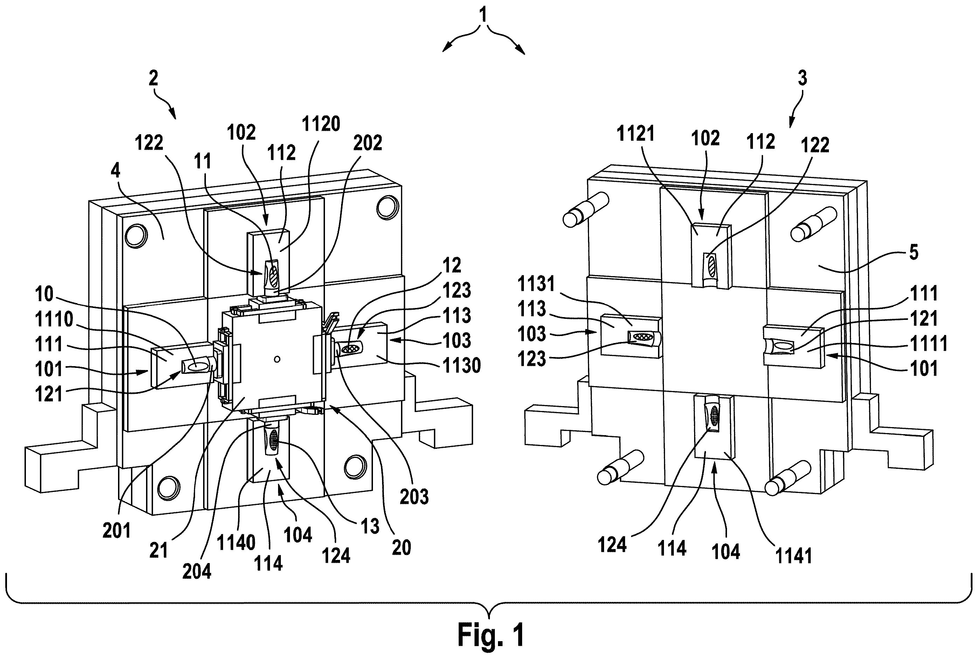

Fig. 1 is a depiction of an example molding unit 1 comprising a movable molding half 2 and a fixed molding half 3 - Fig. 1 provides a view onto the inner sides of the movable molding half 2 and the fixed molding half 3 and it is understood that Fig. 1 thus does not provide a view onto a molding unit 1 in its real working arrangement in which the here shown inner sides would face each other and would typically be mounted on a common support. The molding unit 1 here comprises four molding stations 101, 102, 103 and 104, but it is understood that generally a molding unit in accordance with the present application has at least two molding stations and may thus have two, three, four, five etc. molding stations. Each molding station here comprises one mold 111, 112, 113, 114 and each mold defines a mold cavity 121, 122, 123, and 124. Again, it is understood that each mold may define a plurality of mold cavities instead of a single cavity so that a plurality of articles can be simultaneously injection molded (the term article may also include intermediate article as a final article may only be made at one of the molding stations, while it shall not be excluded that the molding unit only allows to manufacture intermediate articles that will be finalized elsewhere). The movable molding half 2 comprises a movable platen 4 carrying four mold halves 1110, 1120, 1130 and 1140. A transfer unit 20 has a support 21 that is here is realized as a rotatable indexing plate carried on an axle to enable axial motion and rotation motion, e.g., by a controllable drive unit but it shall be understood that a transfer unit in accordance with the present application does not need to comprise a rotatable indexing plate but may alternatively comprise, e.g., a linear transfer plate or the like. The fixed molding half 3 comprises a fixed platen 4 carrying four complementary mold halves 1111, 1121, 1131 and 1141 that form together with the mold halves 1110, 1120, 1130 and 1140 the four mentioned molds 111, 112, 113 and 114 which each define at least one mold cavity 121, 122, 123, 124, respectively. In operation, the fixed and movable molding halves 2 and 3 will be clamped together to allow molten plastic material to be injection molded into the mold cavities 121, 122, 123, 124, specifically wherein the molten plastic material may be simultaneously injection molded into all mold cavities 121, 122, 123, 124. A first intermediate product may be made in mold cavity 121, which first intermediate product may be overmolded with another plastic component in mold cavity 122 to form a second intermediate product, which in turn may then be overmolded in mold cavity 123 to form a third intermediate product and then the third intermediate product may be overmolded in mold cavity 124 to form the final product. The final product would then be a 4-component product. In case of a 2-component product, the molding unit would only need to comprise two molding stations, for a 3-component product three molding stations, respectively. The transfer unit may provide three preferably equidistant stops while the molding unit may have only two molding stations. This may allow to demold the articles from the core at a demolding station. The three stops may then have an angular distance of 120 degrees from each other in rotation direction. In the embodiment shown in Fig. 1, one of the molding stations may be replaced by a demolding station. A demolding station effectively allows removing the articles from the transfer cycle without interrupting the injection cycles.

The molding unit 1 may be part of a plastic injection molding machine that comprises an injection unit to provide heated, molten plastic material to inlets of the fixed molding half 3 (such inlets are typically arranged on the back side of the fixed molding half 3, i.e., the side opposite the side where the mold halves are located). It is here assumed that the basic structure of a plastic injection molding machine is known to the skilled person and the focus of the present description is on the molding unit 1 and specifically on the herein discussed novel features of the molding unit 1.

The support 21 of the transfer unit 20 is shown in a state in which it is in a molding position so that the movable mold half 2 and the fixed mold half 3 could now be clamped together. The support 21 carries four cores 201, 202, 203 and 204 that extend from the support 21 and that are shown in a one-to-one alignment with the mold cavities 121, 122, 123 and 124. The support 21 is arranged to be rotatable around an indexing plate axis A_{I} so that in the shown example a rotation of the support by plus or minus 90 degrees or of a multiple of plus or minus 90 degrees moves the cores 201, 202, 203 and 204 into a different one-to-one alignment with the mold cavities 121, 122, 123 and 124. As is known in the art, the support 21 may be motor driven. It is highlighted that the here shown cores 201, 202, 203 and 204 and mold cavities 121, 122, 123 and 124 do not reflect the cores and cavities of any real articles to be made, but the cores as shown essentially completely fill the cavities and are thus shown for explanatory purposes only. The cores as shown in Fig. 1 show the cores in their respective mold positions. It shall be understood that at molding station 101 the basic article structure 10 is molded and that at the other three molding stations 102, 103 and 104 three overmolded portions 11, 12, 13 of the article 10 are molded as is indicated by differently shaded oval areas on the article 10. As will be explained, the core is not rotated in this example with respect to the support when the core is moved in its molding position at molding station 102, but the mold is moved by 180 degrees relative to the support at molding station 103 and by 90 degrees at molding station 104. As the focus of the present disclosure is on the motion of the cores relative to the support and thus also relative to the molds, molding station 103 will be referred to as the first molding station and molding station 104 will be referred to as the second molding station even though, as just explained, they are the third and fourth stations in the sequence of making the exemplary article 10.

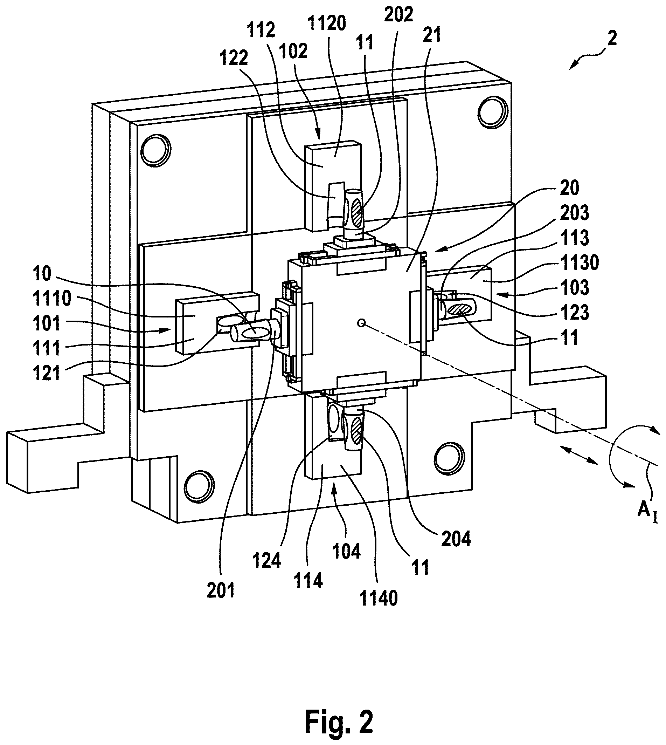

Fig. 2 is a depiction of the movable molding half 2 together with the support 21 of the transfer unit 20 in an axially extracted position in which the support has a distance to the movable mold half 2 and the cores 201, 202, 203 and 204 do not extend into the respective portions of the cavities 121, 122, 123 and 124 formed by the mold halves 1110, 1120, 1130 and 1140.

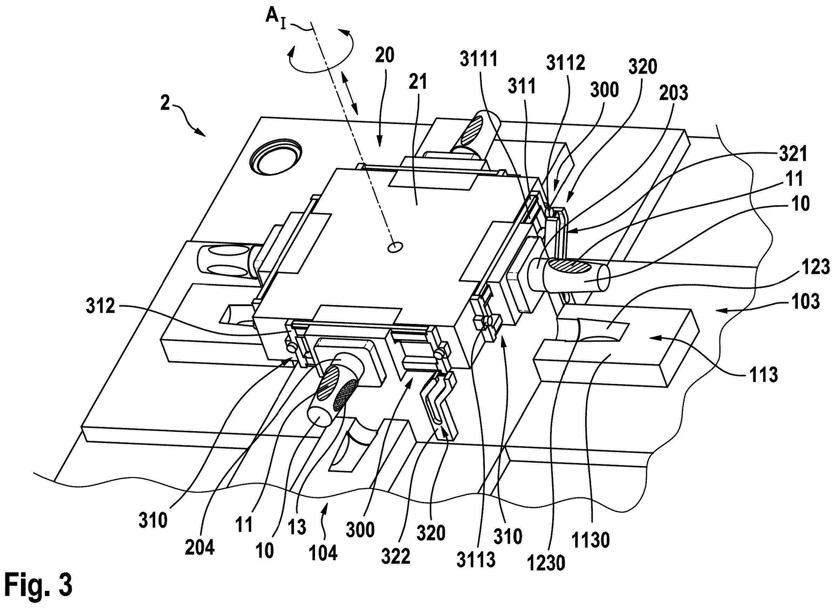

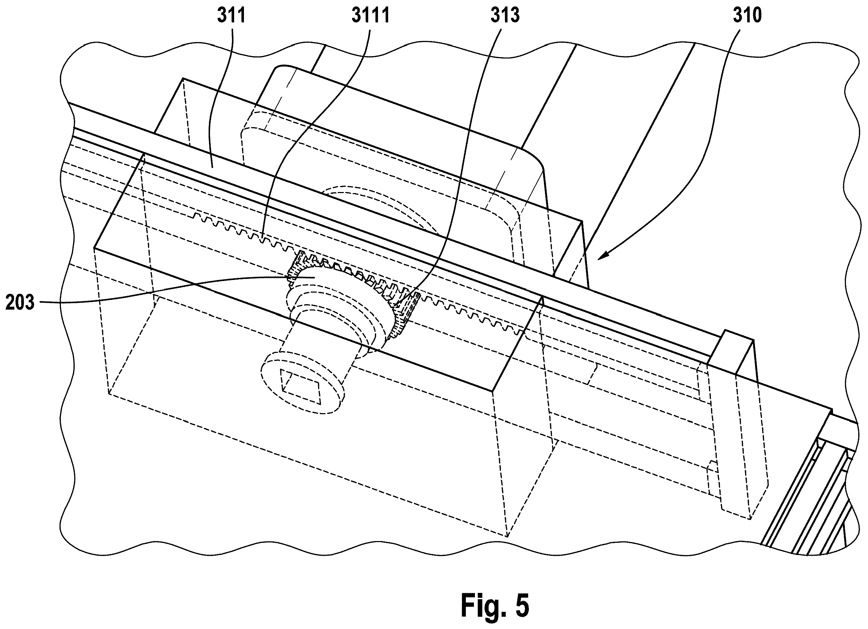

Fig. 3 is a perspective view onto a portion of the movable mold half 2 of the molding unit 1 shown in Fig. 2 together with the transfer unit 20 and of a first core 203 and a second core 204 mounted at the support 21 of the transfer unit 20 together with elements realizing a core actuation unit 300. The core actuation unit 300 comprises a first core actuation sub-unit 310 provided at the transfer unit 20, preferably at the support 21, and a second core actuation sub-unit 320 provided at the movable mold half 2. The first core actuation sub-unit 310 here comprises at least a first frame structure 311 having a toothed bar 3111 and a first and a second curve follower 3112 and 3113. Further, the first core actuation sub-unit 310 comprises a toothed wheel being in toothed engagement with the toothed bar 3111, where here the toothed wheel itself is not visible and it is referred to Fig. 5. The first core 203 is fixedly connected with the toothed wheel so that a rotation of the toothed wheel also rotates the first core 203. A second core actuation sub-unit 320 here comprises a first guiding curve element 321, which is for the ease of description here provided at a first molding station 103. The first core 203 is shown in a first core position relative to the support 21. **In** Fig. 3 it is shown that the core actuation unit 300 can comprise further elements of the first core actuation sub-unit 310, namely a second frame structure 312 that comprises a toothed bar and a first and second curve follower that is provided at the support 21 in relation to a second core 204 and at least one further element, namely a second guiding curve element 322 of the second core-actuation sub-unit 320 that is provided at the moveable mold half 2, preferably at a second molding station 104 different to the first molding station 103 at which the first guiding curve element 321 is provided. The second core 204 may as well be connected with a toothed wheel that is in geared engagement with the toothed bar of the second frame structure 312.

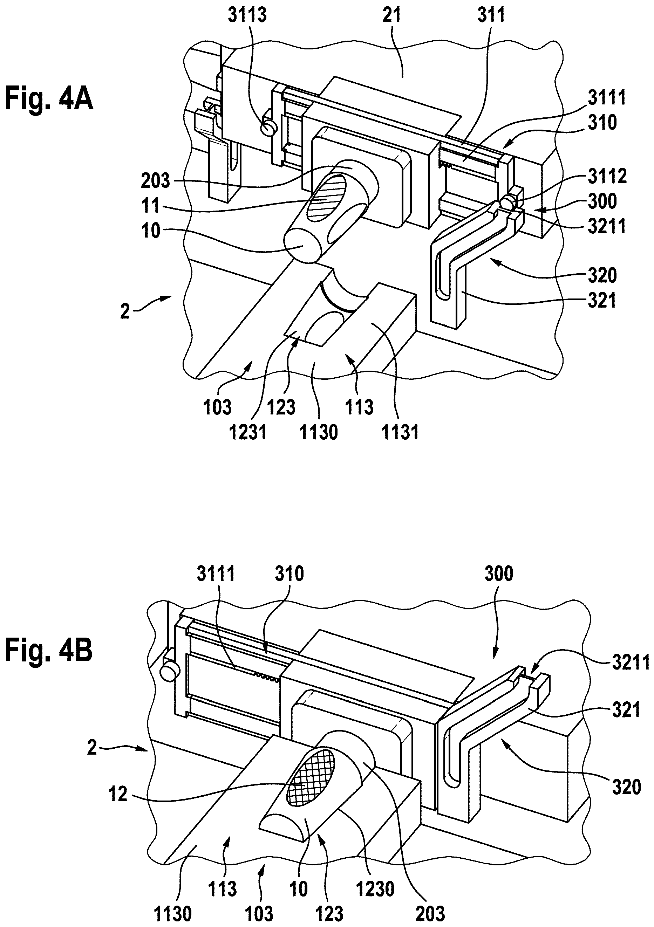

The first core 203 being in a first core position at the first molding station 103 carries an article 10 having a base structure that was molded at a previous molding station (molding station 101 in Fig. 1 and 2) and a first overmolded structure 11 that was overmolded onto the base structure at a previous molding station (molding station 102 in Figs. 1 and 2). A second overmolded structure 12 (see Fig. 1) may be added to the article 10 at the first molding station 103 and a third overmolded structure 13 may be added to the article 10 at the second molding station 104 as will be explained in more detail with reference to Figs. 4A to 4D.

It will be described with reference to Figs. 4A and 4B how the first core 203 is moved from a first core position relative to the support 21 into a second core position relative to the support 21 due to mechanical interaction of the first core actuation sub-unit 310 of the core actuation unit 300 and of the second core actuation sub-unit 320 of the core actuation unit 300 when the transfer unit 20, specifically the support 21, is moved from the shown first transfer position into a second transfer position in which the first core 203 is in its first molding position and extends into a first mold cavity 123 of a first mold 113, where here a first mold half 1130 of the first mold 113 is shown and the first mold half 1130 comprises a first portion 1230 of the first mold cavity 123.

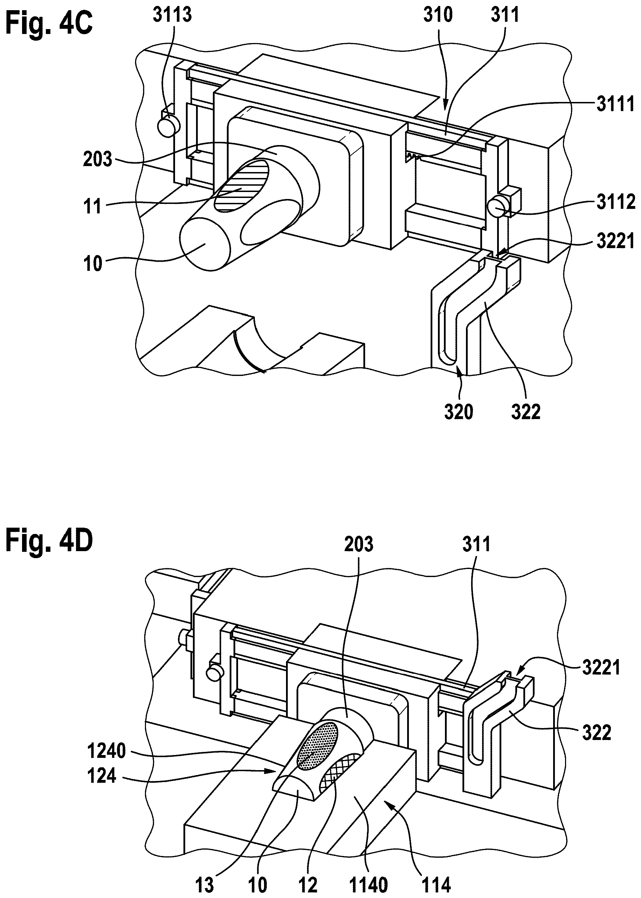

It will further be described with reference to Figs. 4C and 4D how the first core 203 is moved from a fourth core position relative to the support 21 into a third core position relative to the support 21 due to mechanical interaction of the first core actuation sub-unit 310 of the core actuation unit 300 and of the second core actuation sub-unit 320 of the core actuation unit 300 when the transfer unit 20 is moved from the shown third transfer position into a fourth transfer position in which the first core 203 is in its second molding position and extends into a second mold cavity 124 of a second mold 114, where here a first mold half 1140 of the second mold 114 is shown and the second mold half 1140 comprises a first portion 1240 of the second mold cavity 124. As was mentioned already and as is clear from Fig. 1, the movable mold half and the fixed mold half will be clamped together to form the first and second molds and the first and second mold cavities in which molding of components of an article occurs.

In Fig. 4A the transfer station 20 and the support 21 carrying the first core 203 are in the first transfer position in which the first core 203 is in its first core position relative to the support 21. The core actuation unit 300 comprises elements of a first core actuation sub-unit 310 and of a second core actuation sub-unit 320. Specifically, the first core actuation sub-unit 310 comprises a first frame structure 311 provided at the support 21 and the second core actuation sub-unit 320 comprises a first guiding curve element 321 provided at the movable mold half, specifically provided at the first molding station 103. The first frame structure 311 comprises a first curve follower 3112 that is in positional alignment with a groove 3211 of the first guiding curve element, which groove 3211 defines a curve or channel in which the first curve follower 3112 will enter into when the support 21 and the movable mold half 2 are moved towards each other. The first guiding curve element 321 is here shown to have a curve or channel on an inner side (i.e., the side facing the frame structure 311) and on an outer side. This is here the case as the first guiding curve element 321 is arranged to be replaceable in the first place and in the second place is arranged so that it can be positioned in a mirrored fashion on the other side of the frame structure 311. The guiding curve element 321 is here structured so that it will cause a -180 degree rotation of the first core 203 at the first molding station 103. If it were positioned at the other side of the frame structure 311, it would cause a +180 degree rotation of the first core 203, which would lead to the same end result. If the first guiding curve element 321 were structured to cause a different rotation, e.g., -145 degrees, it would cause a +145 degrees rotation when positioned on the other side of the frame structure 311. In Fig. 4A, the first core 203 is shown it its first core position relative to the support 21. It can be seen that the first overmolded structure 11 molded at a previous molding station is positioned on top of the article 10, i.e., on the side that faces the fixed mold half comprising the injection nozzles.

Fig. 4B shows the first core 203 at the first molding station 103 after the second overmolded structure 12 was injection molded. The first core 203 is in its second core position relative to the support 21. The second core 203 was rotated by -180 degrees due to the mechanical interaction of the described mechanically interacting elements of the core actuation unit 300. Specifically, the first curve follower 3112 of the first frame structure 311 of the first core actuation sub-unit 310 entered into the curve or channel 3211 when the support 21 and the movable mold half 2 were moved towards each other. The first curve follower 3112 was thereby driven into a forced motion that moved the toothed bar 3111 of the first frame structure 311 linearly to the left (with reference to the paper plane) and the toothed bar 3111 moved a toothed wheel (see Fig. 5) that is fixedly connected with the first core 203 so that a rotation of the first core 203 relative to the support 21 occurred by a predetermined angle (here: -180 degrees) defined by the channel 3211 and the gearing of the toother bar 3111 and the toothed wheel. The first core 203 is at the end of the motion in the second core position relative to the support 21 and in the first molding position in which it extends into the first mold cavity 123 of the first mold 113. Due to the rotation of the first core 203, a different portion of the article 10 is facing the fixed mold half and thus the second overmolded structure 12 can be injection molded without any need of channels that guide the injection molded material downwards. This allows more freedom in the design of articles to be made by the here described molding unit. In the here shown embodiment, the first core 203 is rotated into a fourth core position relative to the support 21 when the support 21 and the movable mold half 2 are again separated from each other. Due to the inversion of the mechanical interaction as just described, the fourth core position is then identical with the first core position. One may consider a decoupling of the first frame structure 311 from the first guiding curve element 321 for the inverse motion so that a different rotation, if any at all, would occur - the fourth core position could then be different to the first core position.

In Fig. 4C the transfer station 20 and the support 21 carrying the first core 203 are in the third transfer position in which the first core 203 is in its fourth core position relative to the support 21, which fourth core position is here identical with the first core position relative to the support 21. The core actuation unit 300 comprises elements of the first core actuation sub-unit 310 and of the second core actuation sub-unit 320. Specifically, the first core actuation sub-unit 310 comprises the first frame structure 311 provided at the support 21 and the second core actuation sub-unit 320 comprises a second guiding curve element 322 provided at the second molding station 104. The first frame structure 311 comprises the first curve follower 3112 that is in positional alignment with a groove 3221 of the second guiding curve element 322, which groove 3211 defines a curve or channel in which the first curve follower 3112 will enter into when the support 21 and the movable mold half 2 are moved towards each other. The second guiding curve element 322 is here shown to have a curve or channel on an inner side (i.e., the side facing the first frame structure 311) and on an outer side. This is here again the case as the second guiding curve element 322 is arranged to be replaceable in the first place and is in the second place arranged so that it can be positioned in a mirrored fashion on the other side of the frame structure 311. The second guiding curve element 322 is here structured so that it will cause a -90 degree rotation of the first core at the second molding station 104. If it were positioned at the other side of the frame structure, it would cause a +90 degree rotation of the first core. In Fig. 4C, the first core 203 is shown it its first core position relative to the support 21. It can be seen that the first overmolded structure 11 molded at a previous molding station is positioned on top of the article 10 as was the case in Fig. 4A.

Fig. 4D shows the first core 203 at the second molding station 104 after the third overmolded structure 13 was injection molded. The first core 203 is in its third core position relative to the support 21. The second core 203 was rotated by -90 degrees due to the mechanical interaction of the described mechanically interacting elements of the core actuation unit 300. Specifically, the first curve follower 3112 of the first frame structure 311 of the first core actuation sub-unit 310 entered into the curve or channel 3221 of the second guiding curve element 322 when the support 21 and the movable mold half 2 were moved towards each other. The first curve follower 3112 was thereby driven into a forced motion that moved the toothed bar 3111 of the first frame structure 311 to the left (with reference to the paper plane) and the toothed bar 3111 moved the toothed wheel (again, see Fig. 5) that is fixedly connected with the first core 203 so that a rotation of the first core 203 relative to the support 21 occurred by a predetermined angle (here: -90 degrees) defined by the channel 3221 and the gearing of the toother bar 3111 and the toothed wheel. The first core 203 is at the end of the motion in the third core position relative to the support 21 and in the second molding position in which it extends into the second mold cavity 124 of the second mold 114. Due to the rotation of the first core 203, a different portion of the article is facing the fixed mold half and thus the third overmolded structure 13 can be injection molded without any need of channels that guide the injection molded material downwards.

Fig. 5 is a depiction of a detail of the support 21 and of the first core 203 connected with elements of the first core actuation sub-unit 310, of which the first frame structure comprising the toothed bar 3111 is shown. The support 21 is depicted so that the arrangement of the first core actuation sub-unit 310 extending within the support 21 can be seen. The first frame structure 311 is positively guided by the support 21 so that only a linear back and forth motion of the first frame structure is allowed. The toothed bar 3111 is in meshed arrangement with a toothed wheel 313 that is fixedly connected with the first core 203 so that a linear motion of the toothed bar 3111 causes a rotation of the toothed wheel 313, which causes a rotation of the first core 203 around its longitudinal axis.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A molding unit (1) comprising:
a first molding station (101) having a first mold (111) comprising a first mold cavity (121);
a second molding station (102) having a second mold (112) comprising a second mold cavity (122);
a transfer unit (20) comprising a support (21) and at least a first core (201) extending from the support (21);
the transfer unit (20) being arranged for moving the first core (201) into a first molding position at the first molding station (101) and into a second molding position at the second molding station (102), the first core (201) extending into the first mold cavity (121) when the first core (201) is in the first molding position and extending into the second mold cavity (122) when the first core (201) is in the second molding position; and
a core actuation unit (300) being arranged so that at least at the first molding station (101) the first core (201) is moved relative to the support (21) from a first core position into a second core position when the first core (201) is moved into the first molding position;
wherein the first core (201) is rotatable around a rotation axis and the core actuation unit (300) is arranged to move the first core (201) from the first core position to the second core position by rotation around the rotation axis along a first rotation angle and **characterised in that** the core actuation unit (300) comprises only mechanically interacting elements (310, 311, 312, 313, 3111, 3112, 3113, 320, 322).

2. The molding unit in accordance with claim 1, wherein the core actuation unit (300) is arranged to move the first core (201) relative to the support (21) into a third core position different to the second core position when the first core (201) is moved into the second molding position.

3. The molding unit in accordance with claim 1 or claim 2, wherein the core actuation unit (300) is arranged to move the first core (201) from the second core position into a fourth core position when the first core (201) is moved out of the first molding position and prior to moving the first core (201) into the second mold position, preferably wherein the fourth core position is identical with the first core position.

4. The molding unit in accordance with one of claims 1 to 3, wherein the core actuation unit (300) comprises a first core actuation sub-unit (310) provided at the transfer unit (20) and a second core actuation sub-unit (320) provided at the first and/or second molding station (101; 102), further preferably wherein the first core actuation sub-unit (310) comprises a first core actuation element that is movable relative to the first core (201) and a second core actuation element that is fixed relative to the first core (201), wherein the first core actuation element and the second core actuation element are arranged for mechanical interaction such that a motion of the first core actuation element leads to a motion of the second core actuation element and thus to a motion of the first core (201).

5. The molding unit in accordance with claim 4, wherein the first core actuation element and (311) the second core actuation element (313) are geared with each other.

6. The molding unit in accordance with claim 4 or claim 5, wherein the first core actuation element (311) comprises a frame structure (311) and a toothed bar (3111) and the second core actuation element comprises a toothed wheel (313).

7. The molding unit in accordance with one of claims 4 to 5, wherein the second core actuation sub-unit (320) comprises at least a first guiding curve element (321) provided at the first molding station (101) and at least a first curve follower (3112) provided at the first core actuation element, wherein the first curve follower (3112) is arranged to mechanically engage with the first guiding curve element (321) when the first core (201) is moved into the first molding position and to be moved along the first guiding curve element (321) so that the first core actuation element and the mechanically interacting second core actuation element are moved, thereby causing the first core (201) to move from the first core position into the second core position.

8. The molding unit in accordance with claim 7, wherein the first guiding curve element (321) is replaceable.

9. The molding unit in accordance with one of claims 4 to 8, wherein the second core actuation sub-unit (320) comprises a second guiding curve element (322) provided at the second molding station (102), wherein the first curve follower (3112) is arranged to mechanically engage with the second guiding curve element (322) when the first core (201) is moved into the second molding position and to be moved along the second guiding curve element (322) so that the first core actuation element and the mechanically interacting second core actuation element are moved, thereby causing the first core (201) to move into a third core position.

10. The molding unit in accordance with one of claims 1 to 9, comprising at least three molding stations (101, 102, 103) and wherein the transfer unit (20) is arranged to move the first core (201) from any one of the at least three molding stations (101, 102, 103) to any other one of the at least three molding stations (101, 102, 103).

11. The molding unit in accordance with one of claims 1 to 10, wherein the transfer unit (20) comprises an index plate realizing said support (21), the index plate being arranged for rotation around an index plate axis (A_{I}) and for axial motion along the index plate axis (A_{I}).

12. A method of molding an article (10), preferably by using a molding unit (1) in accordance with any one of claims 1 to 11, comprising the steps of
moving a first core (201) into a first molding position in which the first core (201) extends into a first mold cavity (121) of a first mold (111);
while moving the first core (201) into the first molding position, moving the first core (201) from a first core position relative to a support (21) at which the first core (201) is provided into a second core position relative to the support (21), the second core position being different to the first core position, wherein the first core (201) is in the second core position when it is in the first molding position;
injection molding a first plastic component into the first mold cavity (121) to form a first portion of the article (10);
moving the first core (201) from the first molding position into a second molding position in which the first core (201) extends into a second mold cavity (122) of a second mold (112);
while moving the first core (201) into the second molding position, moving the first core (201) from the second core position relative to the support (21) into a third core position different to the second core position relative to the support (201), wherein the first core (201) is in the third core position when it is in the second molding position; and
injection molding a second plastic component into the second mold cavity (122) to form a second portion of the article (10);
**characterised in that** moving the first core (201) from the first core position into the second core position and moving the first core (201) from the second core position into the third core position involves rotating the first core around a rotation axis by using only mechanically interacting elements (310, 311, 312, 313, 3111, 3112, 3113, 320, 322).

13. The method of molding an article in accordance with claim 12, wherein the rotation axis coincides with or is parallel to a longitudinal axis of the first core (201), further preferably wherein the longitudinal axis of the first core (201) extends through a fixed end of the first core (201), the fixed end being where the first core (201) is attached to the support (21), and a free end opposite to the fixed end.

14. The method of molding an article in accordance with claim 12 or claim 13, comprising the step of moving the first core (201) from the second core position into a fourth core position when the first core is moved from the first molding position into the second molding position, preferably wherein the fourth core position is identical with the first core position.

## Patentansprüche

1. Formeinheit (1), umfassend:
eine erste Formstation (101), die eine erste Form (111) aufweist, umfassend einen ersten Formhohlraum (121);
eine zweite Formstation (102), die eine zweite Form (112) aufweist, umfassend einen zweiten Formhohlraum (122);
eine Transfereinheit (20), umfassend einen Träger (21) und mindestens einen ersten Kern (201), der sich von dem Träger (21) erstreckt;
wobei die Transfereinheit (20) zum Verschieben des ersten Kerns (201) in eine erste Formposition an der ersten Formstation (101) und in eine zweite Formposition an der zweiten Formstation (102) angeordnet ist, wobei der erste Kern (201) sich in den ersten Formhohlraum (121) erstreckt, wenn der erste Kern (201) sich in der ersten Formposition befindet, und sich in den zweiten Formhohlraum (122) erstreckt, wenn der erste Kern (201) sich in der zweiten Formposition befindet; und
eine Kernbetätigungseinheit (300), die angeordnet ist, so dass mindestens an der ersten Formstation (101) der erste Kern (201) relativ zu dem Träger (21) von einer ersten Kernposition in eine zweite Kernposition verschoben wird, wenn der erste Kern (201) in die erste Formposition verschoben wird;
wobei der erste Kern (201) um eine Drehachse drehbar ist und die Kernbetätigungseinheit (300) angeordnet ist, um den ersten Kern (201) durch Drehung um die Drehachse entlang eines ersten Drehwinkels von der ersten Kernposition in die zweite Kernposition zu verschieben, und **dadurch gekennzeichnet ist, dass** die Kernbetätigungseinheit (300) nur mechanisch zusammenwirkende Elemente (310, 311, 312, 313, 3111, 3112, 3113, 320, 322) umfasst.

2. Formeinheit nach Anspruch 1, wobei die Kernbetätigungseinheit (300) angeordnet ist, um den ersten Kern (201) relativ zu dem Träger (21) in eine dritte Kernposition zu verschieben, die sich von der zweiten Kernposition unterscheidet, wenn der erste Kern (201) in die zweite Formposition verschoben wird.

3. Formeinheit nach Anspruch 1 oder 2, wobei die Kernbetätigungseinheit (300) angeordnet ist, um den ersten Kern (201) von der zweiten Kernposition in eine vierte Kernposition zu verschieben, wenn der erste Kern (201) aus der ersten Formposition verschoben wird und bevor der erste Kern (201) in die zweite Formposition verschoben wird, vorzugsweise wobei die vierte Kernposition mit der ersten Kernposition identisch ist.

4. Formeinheit nach einem der Ansprüche 1 bis 3, wobei die Kernbetätigungseinheit (300) eine an der Transfereinheit (20) bereitgestellte erste Kernbetätigungsuntereinheit (310) und eine an der ersten und/oder der zweiten Formstation (101; 102) bereitgestellte zweite Kernbetätigungsuntereinheit (320) umfasst, ferner vorzugsweise wobei die erste Kernbetätigungsuntereinheit (310) ein erstes Kernbetätigungselement, das relativ zu dem ersten Kern (201) verschiebbar ist, und ein zweites Kernbetätigungselement umfasst, das relativ zu dem ersten Kern (201) fixiert ist, wobei das erste Kernbetätigungselement und das zweite Kernbetätigungselement für eine mechanische Zusammenwirkung derart angeordnet sind, dass eine Verschiebung des ersten Kernbetätigungselements zu einer Verschiebung des zweiten Kernbetätigungselements und somit zu einer Verschiebung des ersten Kerns (201) führt.

5. Formeinheit nach Anspruch 4, wobei das erste Kernbetätigungselement (311) und das zweite Kernbetätigungselement (313) miteinander verzahnt sind.

6. Formeinheit nach Anspruch 4 oder 5, wobei das erste Kernbetätigungselement (311) eine Rahmenstruktur (311) und eine Zahnstange (3111) umfasst und das zweite Kernbetätigungselement ein Zahnrad (313) umfasst.

7. Formeinheit nach einem der Ansprüche 4 bis 5, wobei die zweite Kernbetätigungsuntereinheit (320) mindestens ein erstes Führungskurvenelement (321), das an der ersten Formstation (101) bereitgestellt ist, und mindestens einen ersten Kurvenfolger (3112) umfasst, der an dem ersten Kernbetätigungselement bereitgestellt ist, wobei der erste Kurvenfolger (3112) angeordnet ist, um das erste Führungskurvenelement (321) mechanisch in Eingriff zu nehmen, wenn der erste Kern (201) in die erste Formposition verschoben wird, und um entlang des ersten Führungskurvenelements (321) verschoben zu werden, so dass das erste Kernbetätigungselement und das mechanisch zusammenwirkende zweite Kernbetätigungselement verschoben werden, wodurch veranlasst wird, dass der erste Kern (201) sich von der ersten Kernposition in die zweite Kernposition verschiebt.

8. Formeinheit nach Anspruch 7, wobei das erste Führungskurvenelement (321) austauschbar ist.

9. Formeinheit nach einem der Ansprüche 4 bis 8, wobei die zweite Kernbetätigungsuntereinheit (320) ein zweites Führungskurvenelement (322) umfasst, das an der zweiten Formstation (102) bereitgestellt ist, wobei der erste Kurvenfolger (3112) angeordnet ist, um das zweite Führungskurvenelement (322) mechanisch in Eingriff zu nehmen, wenn der erste Kern (201) in die zweite Formposition verschoben wird, und um entlang des zweiten Führungskurvenelements (322) verschoben zu werden, so dass das erste Kernbetätigungselement und das mechanisch zusammenwirkende zweite Kernbetätigungselement verschoben werden, wodurch der erste Kern (201) sich in eine dritte Kernposition verschiebt.

10. Formeinheit nach einem der Ansprüche 1 bis 9, umfassend mindestens drei Formstationen (101, 102, 103), und wobei die Transfereinheit (20) angeordnet ist, um den ersten Kern (201) von einer beliebigen der mindestens drei Formstationen (101, 102, 103) in eine beliebige andere der mindestens drei Formstationen (101, 102, 103) zu verschieben.

11. Formeinheit nach einem der Ansprüche 1 bis 10, wobei die Transfereinheit (20) eine Indexplatte umfasst, die den Träger (21) bildet, wobei die Indexplatte für die Drehung um eine Indexplattenachse (Aₗ) und für die axiale Bewegung entlang der Indexplattenachse (Aₗ) angeordnet ist.

12. Verfahren zum Formen eines Gegenstandes (10), vorzugsweise durch Verwenden einer Formeinheit (1) nach einem der Ansprüche 1 bis 11, umfassend die Schritte zum
Verschieben eines ersten Kerns (201) in eine erste Formposition, in der der erste Kern (201) sich in einen ersten Formhohlraum (121) einer ersten Form (111) erstreckt;
während des Verschiebens des ersten Kerns (201) in die erste Formposition, Verschieben des ersten Kerns (201) von einer ersten Kernposition relativ zu einem Träger (21), an dem der erste Kern (201) bereitgestellt ist, in eine zweite Kernposition relativ zu dem Träger (21), wobei die zweite Kernposition sich von der ersten Kernposition unterscheidet, wobei der erste Kern (201) sich in der zweiten Kernposition befindet, wenn er sich in der ersten Formposition befindet;
Spritzgießen einer ersten Kunststoffkomponente in den ersten Formhohlraum (121), um einen ersten Abschnitt des Gegenstands (10) auszubilden;
Verschieben des ersten Kerns (201) von der ersten Formposition in eine zweite Formposition, in der der erste Kern (201) sich in einen zweiten Formhohlraum (122) einer zweiten Form (112) erstreckt;
während des Verschiebens des ersten Kerns (201) in die zweite Formposition, Verschieben des ersten Kerns (201) von der zweiten Kernposition relativ zu dem Träger (21) in eine dritte Kernposition, die sich von der zweiten Kernposition relativ zu dem Träger (201) unterscheidet, wobei der erste Kern (201) sich in der dritten Kernposition befindet, wenn er sich in der zweiten Formposition befindet; und
Spritzgießen einer zweiten Kunststoffkomponente in den zweiten Formhohlraum (122), um einen zweiten Abschnitt des Gegenstands (10) auszubilden;
**dadurch gekennzeichnet, dass** das Verschieben des ersten Kerns (201) von der ersten Kernposition in die zweite Kernposition und das Verschieben des ersten Kerns (201) von der zweiten Kernposition in die dritte Kernposition das Drehen des ersten Kerns um eine Drehachse durch Verwenden ausschließlich mechanisch zusammenwirkender Elemente (310, 311, 312, 313, 3111, 3112, 3113, 320, 322) beinhaltet.

13. Verfahren zum Formen eines Gegenstands nach Anspruch 12, wobei die Drehachse mit einer Längsachse des ersten Kerns (201) zusammenfällt oder parallel zu dieser verläuft, ferner vorzugsweise wobei die Längsachse des ersten Kerns (201) sich durch ein fixiertes Ende des ersten Kerns (201), wobei das fixierte Ende dort ist, wo der erste Kern (201) an dem Träger (21) befestigt ist, und ein freies Ende gegenüber dem fixierten Ende erstreckt.

14. Verfahren zum Formen eines Gegenstands nach Anspruch 12 oder 13, umfassend den Schritt des Verschiebens des ersten Kerns (201) von der zweiten Kernposition in eine vierte Kernposition, wenn der erste Kern von der ersten Formposition in die zweite Formposition verschoben wird, vorzugsweise wobei die vierte Kernposition mit der ersten Kernposition identisch ist.

## Revendications

1. Unité de moulage (1) comprenant :
une première station de moulage (101) ayant un premier moule (111) comprenant une cavité de premier moule (121) ;
une deuxième station de moulage (102) ayant un second moule (112) comprenant une cavité de second moule (122) ;
une unité de transfert (20) comprenant un support (21) et au moins un premier noyau (201) s'étendant à partir du support (21) ;
l'unité de transfert (20) étant agencée pour le déplacement du premier noyau (201) dans une première position de moulage au niveau de la première station de moulage (101) et dans une deuxième position de moulage au niveau de la deuxième station de moulage (102), le premier noyau (201) s'étendant dans la cavité de premier moule (121) lorsque le premier noyau (201) est dans la première position de moulage et s'étendant dans la cavité de second moule (122) lorsque le premier noyau (201) est dans la deuxième position de moulage ; et
une unité d'actionnement de noyau (300) étant agencée de sorte qu'au moins au niveau de la première station de moulage (101) le premier noyau (201) est déplacé par rapport au support (21) d'une première position de noyau à une deuxième position de noyau lorsque le premier noyau (201) est déplacé dans la première position de moulage ;
dans laquelle le premier noyau (201) est rotatif autour d'un axe de rotation et l'unité d'actionnement de noyau (300) est agencée pour déplacer le premier noyau (201) de la première position de noyau à la deuxième position de noyau par rotation autour de l'axe de rotation le long d'un premier angle de rotation et **caractérisée en ce que** l'unité d'actionnement de noyau (300) ne comprend que des éléments interagissant de façon
mécanique (310, 311, 312, 313, 3111, 3112, 3113, 320, 322).

2. Unité de moulage selon la revendication 1, dans laquelle l'unité d'actionnement de noyau (300) est agencée pour déplacer le premier noyau (201) par rapport au support (21) dans une troisième position de noyau différente de la deuxième position de noyau lorsque le premier noyau (201) est déplacé dans la deuxième position de moulage.

3. Unité de moulage selon la revendication 1 ou la revendication 2, dans laquelle l'unité d'actionnement de noyau (300) est agencée pour déplacer le premier noyau (201) de la deuxième position de noyau dans une quatrième position de noyau lorsque le premier noyau (201) est déplacé hors de la première position de moulage et avant le déplacement du premier noyau (201) dans la deuxième position de moulage, de préférence dans laquelle la quatrième position de noyau est identique à la première position de noyau.

4. Unité de moulage selon l'une quelconque des revendications 1 à 3, dans laquelle l'unité d'actionnement de noyau (300) comprend une première sous-unité d'actionnement de noyau (310) fournie au niveau de l'unité de transfert (20) et une seconde sous-unité d'actionnement de noyau (320) fournie au niveau de la première et/ou la deuxième station de moulage (101 ; 102), en outre de préférence dans laquelle la première sous-unité d'actionnement de noyau (310) comprend un premier élément d'actionnement de noyau qui est mobile par rapport au premier noyau (201) et un second élément d'actionnement de noyau qui est fixé par rapport au premier noyau (201), dans laquelle le premier élément d'actionnement de noyau et le second élément d'actionnement de noyau sont agencés pour une interaction mécanique de telle sorte qu'un mouvement du premier élément d'actionnement de noyau amène un mouvement du second élément d'actionnement de noyau et ainsi un mouvement du premier noyau (201).

5. Unité de moulage selon la revendication 4, dans laquelle le premier élément d'actionnement de noyau (311) et le second élément d'actionnement de noyau (313) sont engrenés l'un avec l'autre.

6. Unité de moulage selon la revendication 4 ou la revendication 5, dans laquelle le premier élément d'actionnement de noyau (311) comprend une structure de cadre (311) et une barre dentée (3111) et le second élément d'actionnement de noyau comprend une roue dentée (313).

7. Unité de moulage selon l'une des revendications 4 à 5, dans laquelle la seconde sous-unité d'actionnement de noyau (320) comprend au moins un premier élément de courbe de guidage (321) fourni au niveau de la première station de moulage (101) et au moins un premier suiveur de courbe (3112) fourni au niveau du premier élément d'actionnement de noyau, dans lequel le premier suiveur de courbe (3112) est agencé pour venir en prise de façon mécanique avec le premier élément de courbe de guidage (321) lorsque le premier noyau (201) est placé dans la première position de moulage et pour être déplacé le long du premier élément de courbe de guidage (321) de sorte que le premier élément d'actionnement de noyau et le second élément d'actionnement de noyau interagissant de façon mécanique sont déplacés, provoquant de ce fait le déplacement du premier noyau (201) de la première position de noyau à la deuxième position de noyau.

8. Unité de moulage selon la revendication 7, dans laquelle le premier élément de courbe de guidage (321) est remplaçable.

9. Unité de moulage selon l'une des revendications 4 à 8, dans laquelle la seconde sous-unité d'actionnement de noyau (320) comprend un second élément de courbe de guidage (322) fourni au niveau de la deuxième station de moulage (102), dans laquelle le premier suiveur de courbe (3112) est agencé pour venir en prise de façon mécanique avec le second élément de courbe de guidage (322) lorsque le premier noyau (201) est déplacé dans la deuxième position de moulage et pour être déplacé le long du second élément de courbe de guidage (322) de sorte que le premier élément d'actionnement de noyau et le second élément d'actionnement de noyau interagissant de façon mécanique sont déplacés, provoquant de ce fait le déplacement du premier noyau (201) dans une troisième position de noyau.

10. Unité de moulage selon l'une quelconque des revendications 1 à 9, comprenant au moins trois stations de moulage (101, 102, 103) et dans laquelle l'unité de transfert (20) est agencée pour déplacer le premier noyau (201) de l'une quelconque des au moins trois stations de moulage (101, 102, 103) vers une autre quelconque des au moins trois stations de moulage (101, 102, 103).

11. Unité de moulage selon l'une des revendications 1 à 10, dans laquelle l'unité de transfert (20) comprend une plaque d'indice réalisant ledit support (21), la plaque d'indice étant agencée pour une rotation autour d'un axe de plaque d'indice (Aₗ) et pour un mouvement axial le long de l'axe de plaque d'indice (Aₗ).

12. Procédé de moulage d'un article (10), de préférence à l'aide d'une unité de moulage (1) selon l'une quelconque des revendications 1 à 11, comprenant les étapes consistant à
déplacer un premier noyau (201) dans une première position de moulage où le premier noyau (201) s'étend dans une cavité de premier moule (121) d'un premier moule (111) ;
tout en déplaçant le premier noyau (201) dans la première position de moulage, déplacer le premier noyau (201) d'une première position de noyau par rapport à un support (21) au niveau duquel le premier noyau (201) est fourni vers une deuxième position de noyau par rapport au support (21), la deuxième position de noyau étant différente de la première position de noyau, dans lequel le premier noyau (201) est dans la deuxième position de noyau lorsqu'il est dans la première position de moulage ;
mouler par injection un premier composant en plastique dans la première cavité de moule (121) pour former une première partie de l'article (10) ;
déplacer le premier noyau (201) de la première position de moulage dans une deuxième position de moulage où le premier noyau (201) s'étend dans une cavité de second moule (122) d'un second moule (112) ;
tout en déplaçant le premier noyau (201) dans la deuxième position de moulage, déplacer le premier noyau (201) de la deuxième position de noyau par rapport au support (21) dans une troisième position de noyau différente de la deuxième position de noyau par rapport au support (201), dans lequel le premier noyau (201) est dans la troisième position de noyau lorsqu'il est dans la deuxième position de moulage ; et
mouler par injection un second composant en plastique dans la cavité de second moule (122) pour former une seconde partie de l'article (10) ;
**caractérisée en ce que** le déplacement du premier noyau (201) de la première position de noyau dans la deuxième position de noyau et le déplacement du premier noyau (201) de la deuxième position de noyau à la troisième position de noyau implique une rotation du premier noyau autour d'un axe de rotation à l'aide uniquement d'éléments interagissant de façon
mécanique (310, 311, 312, 313, 3111, 3112, 3113, 320, 322).

13. Procédé de moulage d'un article selon la revendication 12, dans lequel l'axe de rotation coïncide avec ou est parallèle à un axe longitudinal du premier noyau (201), en outre de préférence dans lequel l'axe longitudinal du premier noyau (201) s'étend à travers une extrémité fixée du premier noyau (201), l'extrémité fixée étant là où le premier noyau (201) est attaché au support (21), et une extrémité libre à l'opposé de l'extrémité fixée.

14. Procédé de moulage d'un article selon la revendication 12 ou la revendication 13, comprenant l'étape consistant à déplacer le premier noyau (201) de la deuxième position de noyau dans une quatrième position de noyau lorsque le premier noyau est déplacé de la première position de moulage dans la deuxième position de moulage, de préférence dans lequel la quatrième position de noyau est identique à la première position de noyau.
